(19)

Europäisches
Patentamt
European
Patent Office
Office européen
des brevets

(11) **EP 1 677 394 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(51) Int Cl.:
*H01S 3/07* *(2006.01)*          *H01S 3/23* *(2006.01)*
*H01S 3/16* *(2006.01)*          *H01S 3/091* *(2006.01)*

(21) Anmeldenummer: **04030553.4**

(22) Anmeldetag: **23.12.2004**

(54) **Laserverstärker und Laserresonator mit mehreren laseraktiven Medien**

Laser amplifier and laser resonator with a plurality of laser gain media

Amplificateur laser et resonateur laser comprennant plusieurs milieux de gain laser

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**05.07.2006 Patentblatt 2006/27**

(73) Patentinhaber: **TRUMPF Laser GmbH + Co. KG**
**78713 Schramberg (DE)**

(72) Erfinder:
• **Schmitz, Christian**
**78655 Dunningen (DE)**
• **Voss, Andreas**
**78713 Schramberg (DE)**

(74) Vertreter: **Rank, Christoph**
**Kohler Schmid + Möbus,**
**Ruppmannstrasse 27**
**70565 Stuttgart (DE)**

(56) Entgegenhaltungen:
WO-A-00/25394          WO-A-87/05160
US-A- 5 926 494          US-A1- 2001 038 658
US-A1- 2002 075 934          US-A1- 2004 095 975

• SCOTT A M ET AL: "EFFICIENT HIGH-GAIN LASER AMPLIFICATION FROM A LONG-GAIN AMPLIFIER BY USE OF SELF-IMAGING MULTIPASS GEOMETRY" APPLIED OPTICS, OPTICAL SOCIETY OF AMERICA, WASHINGTON, US, Bd. 40, Nr. 15, 20. Mai 2001 (2001-05-20), Seiten 2461-2467, XP001066025 ISSN: 0003-6935

**EP 1 677 394 B1**

**Beschreibung**

Die vorliegende Erfindung betrifft einen Festkörperlaserverstärker beziehungsweise Festkörperlaserresonator mit mindestens zwei laseraktiven Medien in einem gemeinsamen Laserstrahlungsfeld, wobei die laseraktiven Medien keine harte Apertur für das Laserstrahlungsfeld bilden.

In der DE 198 35 108 A1 wird ein Laserresonator der eingangs genannten Art beschrieben, bei dem mehrere Scheibenlaserkristalle in einem gemeinsamen Resonator angeordnet sind. Das Laserstrahlungsfeld durchsetzt die Laserkristalle. Der Resonator weist zur Ausbildung des Laserstrahlungsfeldes zwei Endspiegel und zusätzlich zwischen den Scheibenlaserkristallen angeordnete Umlenkspiegel (Planspiegel) auf.

Bei der Auslegung eines Resonators für einen Hochleistungs-Festkörperlaser ist es ein Ziel, eine hohe Stabilität des Resonators und konstante Strahleigenschaften bei variierenden Betriebsparametem zu erreichen. Im Gegensatz zu konventionellen Hochleistungs-Stablasem ist beim Hochleistungs-Scheibenlaser bei Verwendung einer hinreichend steifen Wärmesenke oder eines transparenten Stützkörpers zur Stabilisierung des darauf befestigten laseraktiven Mediums die thermisch induzierte sphärische Wellenfrontdeformation des Resonatorstrahlungsfeldes ("thermische Linse") beim Durchgang der Resonatorstrahlung durch das laseraktive Medium nicht der dominierende Faktor für die Stabilität des Resonators. Ein Hochleistungs-Scheibenlaser kann daher so ausgelegt werden, dass der Resonator im gesamten Pumpleistungsbereich weit von den kritischen Punkten bzw. den Grenzen des dynamischen Stabilitätsbereichs, wie sie durch das Stabilitätsdiagramm (g-Diagramm) beschrieben werden, entfernt bleibt. Dies gilt auch für den Fall mehrerer laseraktiver Medien (Scheibenlaserkristalle) in einem Resonator.

Zwei andere Effekte haben beim Scheibenlaserresonator bzw. Scheibenlaserverstärker einen wesentlich größeren Einfluss auf die Eigenschaften des Laserstrahlungsfeldes, nämlich die beim Durchgang des Laserstrahlungsfeldes durch ein laseraktives Medium auftretende statische Wellenfrontdeformation einerseits sowie thermisch induzierte Beugungsverluste andererseits.

Die statische Wellenfrontdeformation des Laserstrahlungsfeldes ist bedingt durch eine Abweichung des laseraktiven Mediums von seiner idealen Form, die sich vor allem aufgrund von Fertigungstoleranzen ergibt. Die statische Wellenfrontdeformation setzt sich zusammen aus einem sphärischen Anteil, resultierend aus der Abweichung des laseraktiven Mediums vom gewünschten Radius, und einem irregulären (asphärischen) Anteil. Der sphärische Anteil ergibt sich aus der Differenz von Soll- und Ist-Brechkraft des laseraktiven Mediums und wird auch als (statischer) Brechkraftfehler bezeichnet. Der statische Brechkraftfehler addiert sich zu der - auch beim Hochleistungs-Scheibenlaser vorhandenen - dynamischen thermischen Linse hinzu und kann diese sogar übertreffen. Die Brechkraftfehler mehrerer Kristalle in einem Scheibenlaserresonator bzw. -verstärker müssen bei der Auslegung des Resonators oder Verstärkers berücksichtigt werden. Die typische Auslegung sieht - unter der Annahme gleicher Brechkräfte - gleiche Durchmesser des Laserstrahlungsfeldes auf den verschiedenen Kristallen vor. Unterschiedliche Brechkräfte der Kristalle führen jedoch zu mehr oder minder unterschiedlichen Strahldurchmessern auf den Kristallen. Dadurch ergeben sich folgende Probleme: Auf Kristallen mit vergrößertem Strahldurchmesser werden die Außenbereiche des Laserstrahlungsfeldes nicht verstärkt, sondern teilweise absorbiert. Dagegen wird bei Kristallen mit verkleinertem Strahldurchmesser die im Außenbereich des Pumpflecks verfügbare Leistung nicht mehr abgerufen. Letzteres kann im ungünstigsten Fall zu einer lokalen Überhitzung des Kristalls und zu seiner Zerstörung führen. In jedem Fall tritt eine Verringerung des Wirkungsgrades ein.

Die thermisch induzierten Beugungsverluste im Scheibenlaserresonator bzw. -verstärker werden durch eine irreguläre Wellenfrontdeformation des Laserstrahlungsfeldes beim Durchgang durch das thermisch belastete laseraktive Medium hervorgerufen. Beim Scheibenlaser dominiert die Wellenfrontdeformation im Randbereich des Pumpflecks, d.h. im Übergangsbereich vom heißen, gepumpten Kristallbereich zum kühlen, ungepumpten Außenbereich. Zusätzlich spielen Inhomogenitäten in der Pumplichtverteilung sowie Verzerrungen des Laserstrahlungsfeldes aufgrund von fluktuierenden, thermisch unterschiedlich belasteten Bereichen im laseraktiven Medium eine Rolle. Durch die Verzerrung der Wellenfront wird im Resonator Energie zwischen den Resonatormoden umverteilt. Dies führt auch zu einem Energieübertrag in Moden, die im Resonator nicht ausreichend verstärkt werden ("Leck-Moden"). Der Scheibenlaser reagiert aufgrund seiner geringen Verstärkung besonders empfindlich auf solche Verluste. Die Verluste sind von der Auslegung des Resonators und dabei insbesondere von der geforderten Strahlqualität der Laserausgangsstrahlung abhängig. Im Scheibenlaserverstärker bedingen die thermisch induzierten Beugungseffekte bei unzureichender Filterung zwischen den Verstärkerstufen eine im Strahlverlauf stetig zunehmende Verschlechterung der Strahlqualität. Wird die Strahlqualität anschließend durch harte Blenden wieder hergestellt, bedeutet dies unter Umständen einen erheblichen Leistungs- bzw. Wirkungsgradverlust.

Je höher die Anforderungen an die Strahlqualität eines Scheibenlaserresonators bzw. -verstärkers sind, umso stärker wirken sich Beugungseffekte auf den Wirkungsgrad aus. Analog verhält sich die Empfindlichkeit gegen dynamische und statische Brechkraftfehler: Der dynamische Stabilitätsbereich, d.h. der zulässige Bereich der Brechkräfte der laseraktiven Medien, ist umso kleiner, je größer der Pumpfleckdurchmesser und je höher die geforderte Strahlqualität sind.

Sowohl der Einfluss des statischen Brechkraftfehlers als auch der der thermisch induzierten Beugungsverluste nehmen mit der Anzahl der Durchgänge des Laserstrahlungsfeldes durch ein laseraktives Medium während eines Resonatorumlaufs bzw. innerhalb einer Verstärkerkette zu. Wie stark sich die Anzahl der Durchgänge auswirkt, hängt wesentlich von der Auslegung des Resonators bzw. Verstärkers ab.

Statische Brechkraftfehler und thermisch induzierte Beugungsverluste haben auch bei Hochleistungs-Stablasern mit mehreren Stäben in einem Resonator oder Verstärker einen Einfluss auf den Wirkungsgrad und die Resonatorstabilität. Dieser Einfluss macht sich insbesondere bei hohen Anforderungen an die Strahlqualität, großen Strahlquerschnitten, geringer Verstärkung pro Durchgang durch einen Laserkristall und dem Fehlen von harten Blenden (z.B. Stabmantelflächen) bemerkbar. Bei dynamisch stabil ausgelegten Stablasersystemen mit starker thermischer Linse und hoher Verstärkung (z.B. Nd:YAG oder Nd:YVO$_4$ bei 1064 nm) ist die Strahlqualität durch die thermische Linse begrenzt und die Beugungsverluste sind typischerweise durch die harten Aperturen dominiert, so dass die thermisch induzierten Beugungsverluste in den Hintergrund treten. Nur bei Stablasersystemen mit eingeschränktem dynamischem Stabilitätsbereich (d.h. nahezu konstanter Pumpleistung) und dem Fehlen von harten Aperturen sowie vorzugsweise bei laseraktiven Medien mit geringer Verstärkung (z.B. Yb:YAG) können die thermisch induzierten Beugungsverluste wesentlichen Einfluss auf den Wirkungsgrad nehmen.

Beim Scheibenlaser ist das Fehlen harter, unmittelbar an das aktive Volumen grenzender Blenden eine charakteristische Eigenschaft des Lasers. Beim Scheibenlaser ist der Einsatz von harten Aperturen zur Festlegung des Strahlparameterprodukts nicht erforderlich und im Allgemeinen auch nicht sinnvoll, da Beugungsverluste an den Blenden den Wirkungsgrad des Scheibenlaserresonators erheblich reduzieren würden und die Blenden sehr genau zentriert und im Durchmesser sorgfältig auf die Resonatormoden abgestimmt sowie - zumindest bei hohen Laserleistungen - auch gekühlt werden müssten. Da der ungepumpte Außenbereich der Laserkristallscheibe bei Quasi-Dreiniveau-Lasersystemen wie den für Scheibenlaser üblichen Ytterbium-dotierten Lasermaterialien (Yb:YAG etc.) eine Absorption für die Laserstrahlung aufweist, bildet er in Verbindung mit dem gepumpten Teilbereich eine "weiche" Verstärkungs-Nerlust-Blende (engl. "gain aperture"): Im gepumpten Innenbereich des Laserkristalls findet Verstärkung der Laserstrahlung statt, im ungepumpten Außenbereich wird die Laserstrahlung absorbiert. Diese "weiche" Blende übernimmt die Funktion der harten Blenden bei gleichzeitig stark reduzierten Beugungsverlusten. Nachteilig ist es, dass die Position der Verstärkungs-/ Verlust-Blenden im Resonator durch die axiale Position der Laserkristalle fest vorgegeben ist.

Bei Stablasern lassen sich harte Blenden im Laserstrahlungsfeld vermeiden, wenn die Stabmantelflächen nicht als Apertur wirken. Dies ist etwa bei axial nur in einem zentralen Teilvolumen gepumpten Stäben der Fall. Eine andere Möglichkeit zur Vermeidung harter Blenden stellen gebondete Stäbe dar, die konzentrisch um das aktive Volumen ein brechzahlangepasstes passives (transparentes oder schwach absorbierendes) Volumen aufweisen. In beiden Fällen ergibt sich ähnlich wie beim Scheibenlaserkristall eine "weiche" Verstärkungs-/ Verlust-Blende im Übergang vom gepumpten zum ungepumpten Kristallvolumen.

Die Aufgabe der vorliegenden Erfindung ist es, einen Laserresonator oder -verstärker der eingangs genannten Art, dessen laseraktiven Medien keine harten Aperturen - d.h. keine scharf berandete Blenden, die den auslegungsgemäßen Strahlquerschnitt signifikant beschneiden bzw. limitieren - für das Laserstrahlungsfeld bilden, dahingehend weiterzubilden, dass der Einfluss der statischen Wellenfrontdeformation (des statischen Brechkraftfehlers) und insbesondere der Einfluss der thermisch induzierten Beugungsverluste auf den Wirkungsgrad des Resonators bzw. Verstärkers und die resultierende Strahlqualität minimiert werden, ohne harte Blenden in das Laserstrahlungsfeld einzubringen.

Diese Aufgabe wird erfindungsgemäß dadurch gelöst, dass im Laserstrahlungsfeld zwischen zwei benachbarten laseraktiven Medien mindestens ein fokussierendes optisches Element angeordnet ist, dessen Brennweite und dessen Abstand von den Oberflächen bzw. den Hauptebenen der zwei benachbarten laseraktiven Medien derart gewählt sind, dass die Oberflächen bzw. die Hauptebenen der laseraktiven Medien annähernd durch eine Nahfeld-Fernfeld-Transformation (Fourier-Transformation) ineinander überführt werden können.

Durch die Nahfeld-Fernfeld-Transformation zwischen den gekoppelten laseraktiven Medien wird eine Ausfilterung der thermisch induzierten Beugungsanteile des Laserstrahlungsfeldes ohne harte Blenden erreicht. Zwei nicht äquivalente, durch die Oberflächen der Scheibenlaserkristalle bzw. die Hauptebenen der Laserstäbe gebildete Ebenen im Laserstrahlverlauf werden durch die Verstärkungs-Nerlust-Blenden des gepumpten Bereichs der Laserkristalle gefiltert. Die eine der beiden Ebenen stellt jeweils (annähernd) das Fernfeld der anderen dar. Da die optische Weglänge des zu verstärkenden Laserstrahls innerhalb eines Laserstabs im Gegensatz zum Scheibenlaserkristall typischerweise nicht vernachlässigbar kurz ist, ist bei gekoppelten Laserstäben die Nahfeld-Fernfeld-Transformation nur für ausgewählte Punkte innerhalb der Stäbe exakt durchführbar. Daher werden die einander zugehörigen Nah- bzw. Fernfelder in die Hauptebenen der Stäbe gelegt.

In einer bevorzugten Ausführungsform des erfindungsgemäßen Laserresonators oder Laserverstärkers ist das fokussierende optische Element für die Nahfeld-Fernfeld-Transformation eine Linse mit positiver Brennweite, die ungefähr im Brennweitenabstand von den Oberflächen zweier Scheibenlaserkristalle oder von den benachbarten Hauptebenen zweier Laserstäbe angeordnet ist. Die Linse erzeugt in ihrer Brennebene für jeden vom ersten Kristall ausgehenden Beugungsanteil ein Beugungsbild im zum jeweiligen Beugungswinkel proportionalen Abstand von der Strahlachse. In der Brennebene befindet sich der zweite, gekoppelte Scheibenlaserkristall bzw. eine Hauptebene des zweiten, gekoppelten Laserstabs, an dessen "weicher" Verstärkungs-/Verlust-Blende Strahlungsanteile mit zu großem, d.h. nicht mit der geforderten Strahlqualität zu vereinbarendem Beugungswinkel ausgefiltert werden. In umgekehrter Reihenfolge der Laserkristalle wirkt die Linse in analoger Weise.

In einer weiteren bevorzugten Ausführungsform ist das fokussierende optische Element für die Nahfeld-Fernfeld-Transformation ein sphärischer Hohlspiegel, der ungefähr im Abstand des halben Krümmungsradius von den Oberflächen zweier Scheibenlaserkristalle bzw. von den benachbarten Hauptebenen zweier Laserstäbe angeordnet ist. Die beiden Laserkristalle bzw. ihre benachbarten Hauptebenen befinden sich also jeweils annähernd in der Brennebene des Spiegels. Diese Anordnung bietet gegenüber der Verwendung einer Linse als fokussierendem Element den Vorteil, dass der Hohlspiegel nicht vom Laserstrahlungsfeld durchsetzt wird. So werden thermische Störungen im fokussierenden Element vermieden und bei geeigneter Auslegung der vorzugsweise dielektrisch hochreflektierend ausgeführten Spiegelbeschichtung minimale Verluste an der fokussierenden Optik ermöglicht. In einer alternativen Ausgestaltung kann an Stelle des sphärischen Hohlspiegels ein Paraboloid- oder Toroid-Spiegel verwendet werden.

In einer Weiterbildung des erfindungsgemäßen Laserresonators oder Laserverstärkers wird der Einfluss des Brechkraftfehlers bei mehreren in dem gemeinsamen Resonator oder Verstärker betriebenen Laserkristallen durch eine Anordnung vermindert, bei der mindestens ein zusätzliches fokussierendes optisches Element zwischen (je) zwei benachbart im Resonator angeordneten Laserkristallen eingefügt ist, das eine Abbildung der Kristalle bzw. der Kristallhauptebenen und damit eine Abbildung der gepumpten Teilbereiche (Pumpflecken) sowie des Laserstrahlungsfeldes auf den Kristallen bzw. in den Kristallhauptebenen aufeinander bewirkt. Durch die Abbildung wird das Verhältnis der Durchmesser des Laserstrahlungsfeldes auf den beiden Kristallen bzw. Kristallhauptebenen unabhängig von deren Brechkräften allein durch den Abbildungsmaßstab festgelegt.

Bei einer vorteilhaften Ausführungsform des erfindungsgemäßen Laserresonators oder Laserverstärkers ist das zusätzliche fokussierende optische Element für die Abbildung derart ausgebildet und im Laserstrahlungsfeld angeordnet, dass die Oberflächen zweier Scheibenlaserkristalle bzw. die benachbarten Hauptebenen zweier Laserstäbe im Maßstab eins zu eins aufeinander abgebildet werden. Bei einer 1:1-Abbildung ergeben sich - unabhängig von etwaigen Brechkraftunterschieden - gleiche Durchmesser des Laserstrahlungsfeldes auf beiden Scheibenlaserkristallen bzw. in den benachbarten Hauptebenen der Laserstäbe. Dieser Abbildungsmaßstab ist immer dann sinnvoll, wenn - wie in den meisten Fällen üblich und günstig - beide Laserkristalle durch eine identische Pumpstrahlungsanordnung mit gleichem Pumpfleckdurchmesser gepumpt werden. Für den Resonator werden die zwei Laserkristalle durch die Abbildung näherungsweise zu einem einzelnen Laserkristall mit einer Brechkraft, die der Summe der Einzelbrechkräfte entspricht.

In einer Ausführungsform besteht das zusätzliche fokussierende optische Element für die Abbildung aus einer Linse mit positiver Brennweite, die ungefähr im doppelten Brennweitenabstand von den Oberflächen zweier Scheibenlaserkristalle bzw. von benachbarten Hauptebenen zweier Laserstäbe angeordnet ist, so dass sich automatisch eine 1:1-Abbildung der Scheibenlaserkristalle bzw. der Hauptebenen aufeinander ergibt.

In einer weiteren bevorzugten Ausführungsform ist das zusätzliche fokussierende optische Element für die Abbildung ein sphärischer Hohlspiegel, der ungefähr im Abstand seines Radius von den Oberflächen zweier Scheibenlaserkristalle bzw. von den benachbarten Hauptebenen zweier Laserstäbe angeordnet ist. Diese Anordnung bietet gegenüber der Verwendung einer Linse als abbildendem Element den Vorteil, dass der Hohlspiegel nicht vom Laserstrahlungsfeld durchsetzt wird, wodurch thermische Störungen im optischen Element vermieden und Verluste durch eine geeignete, hochreflektierende Spiegelbeschichtung minimiert werden können. In einer alternativen Ausgestaltung kann an Stelle des sphärischen Hohlspiegels ein Paraboloid- oder Toroid-Spiegel verwendet werden.

Bei einer weiteren, besonders bevorzugten Ausführungsform ist das zusätzliche fokussierende optische Element für die Abbildung durch eine Teleskopanordnung aus zwei vorzugsweise identischen Hohlspiegeln oder Linsen gebildet. Die Abbildung durch einen einzelnen Spiegel oder eine einzelne Linse führt zu einem Brechkraftüberschuss der Einheit aus den zwei Laserkristallen und dem abbildenden Element, dessen Betrag umgekehrt proportional zur Brennweite der Linse bzw. zum Radius des Spiegels ist. Ist es für die weitere Resonatorauslegung notwendig, diesen Brechkraftüberschuss gering zu halten, so muss die Brennweite der Linse bzw. der Radius des Spiegels recht groß gewählt werden. Dieser Nachteil kann durch die Verwendung eines Teleskops vermieden werden, das aus zwei Hohlspiegeln mit gleichem Radius oder zwei Linsen mit gleicher Brennweite besteht. Hierbei sind die Spiegel jeweils etwa im Abstand des halben Radius, die Linsen analog im Abstand der Brennweite von jeweils einem der zwei Laserkristalle angeordnet. Der Abstand zwischen den beiden Spiegeln ist gleich dem Radius und analog der Linsenabstand gleich der doppelten Brennweite, wenn eine Abbildung ohne Brechkraftüberschuss erreicht werden soll. Durch Variation des Spiegel- bzw. Linsenabstands können gezielt sowohl ein positiver als auch ein negativer Brechkraftüberschuss erzeugt werden, der beispielsweise die Kompensation von Toleranzen in der Summenbrechkraft der beiden aufeinander abgebildeten Laserkristalle ermöglicht.

Wenn mehr als zwei laseraktive Medien in einem Laserresonator oder -verstärker angeordnet sind, können vorteilhafterweise sowohl die Abbildung von zwei Kristalloberflächen bzw. Hauptebenen aufeinander als auch die Nahfeld-Fernfeld-Transformation zur Beeinflussung des Laserstrahlungsfeldes angewendet werden, in der Regel jedoch nicht an demselben Paar von Laserkristallen. Es ist aber auch möglich, dass das Strahlungsfeld im Verstärker oder Resonator mehrfach über dieselben Laserkristalle führt, z.B. indem Umlenkspiegel in den Strahlengang eingebracht werden. In einer solchen Ausführung ist auch eine Kombination von Abbildung und Nahfeld-Fernfeld-Transformation an demselben Paar von Laserkristallen möglich.

In einer besonders bevorzugten Ausführungsform eines Scheibenlaserresonators sind mindestens zwei Paare von Scheibenlaserkristallen im Strahlungsfeld des Resonators angeordnet, wobei die Oberflächen der Scheibenlaserkristalle jedes Paares jeweils durch ein erstes fokussierendes optisches Element aufeinander abgebildet sind und wobei ein zweites fokussierendes optisches Element im Laserstrahlungsfeld zwischen den Paaren angeordnet ist, das die Oberfläche eines Scheibenlaserkristalls des einen Paares und die Oberfläche eines Scheibenlaserkristalls des anderen Paares über eine Nahfeld-Fernfeld-Transformation (Fourier-Transformation) miteinander koppelt. Durch diese Anordnung werden sowohl Brechkraftfehler der einzelnen Laserkristalle kompensiert als auch unerwünschte thermisch induzierte Beugungsanteile des Laserstrahlungsfeldes ausgefiltert. Der derart aufgebaute Laserresonator verfügt über einen großen Stabilitätsbereich mit konstanten Strahleigenschaften, ohne dass zusätzliche harte Blenden in das Laserstrahlungsfeld eingebracht werden müssen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1    eine schematische Darstellung einer ersten Ausführungsform eines erfindungsgemäßen Laserresonators mit zwei Scheibenlaserkristallen und einem sphärischen Hohlspiegel als fokussierendem optischen Element für die Nahfeld-Fernfeld-Transformation;

Fig. 2    eine schematische Darstellung einer zweiten Ausführungsform eines erfindungsgemäßen Laserresonators mit zwei Scheibenlaserkristallen und einer Sammellinse als fokussierendem optischen Element für die Nahfeld-Fernfeld-Transformation;

Fig. 3    eine schematische Darstellung einer dritten Ausführungsform eines erfindungsgemäßen Laserresonators mit zwei Laserstäben und einer Sammellinse als fokussierendem optischen Element für die Nahfeld-Fernfeld-Transformation;

Fig. 4    eine schematische Darstellung einer vierten Ausführungsform eines erfindungsgemäßen Laserresonators mit zwei Paaren von Scheibenlaserkristallen und sphärischen Hohlspiegeln als fokussierenden optischen Elementen für die Nahfeld-Fernfeld-Transformation und für die Abbildung;

Fig. 5    eine schematische Darstellung eines Details aus einer fünften Ausführungsform eines erfindungsgemäßen Laserresonators oder Laserverstärkers mit zwei Scheibenlaserkristallen und einem Teleskop aus zwei sphärischen Hohlspiegeln als fokussierendem optischen Element für die Abbildung der Laserkristalle aufeinander; und

Fig. 6    eine schematische Darstellung einer sechsten Ausführungsform eines erfindungsgemäßen Laserresonators mit zwei Scheibenlaserkristallen und sphärischen Hohlspiegeln als fokussierenden optischen Elementen für die Nahfeld-Fernfeld-Transformation und für die Abbildung.

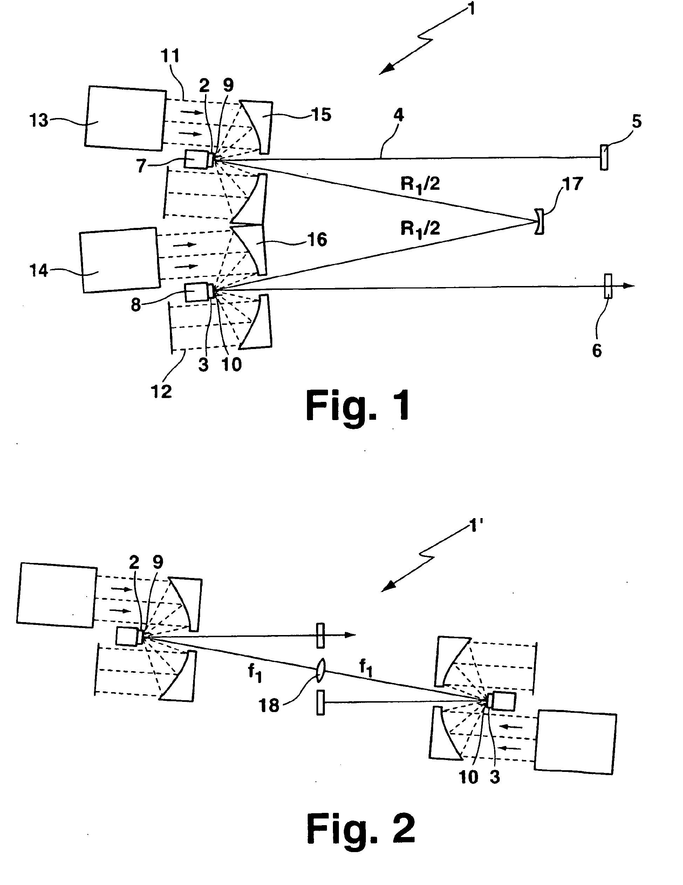

Der in **Fig. 1** gezeigte Laserresonator **1** weist einen ersten Scheibenlaserkristall **2** und einen zweiten Scheibenlaserkristall **3** als laseraktive Medien in einem gemeinsamen Laserstrahlungsfeld **4** zwischen einem Endspiegel **5** und einem Auskoppelspiegel **6** auf. Die beiden Scheibenlaserkristalle 2, 3 weisen, ebenso wie die unten beschriebenen Vorrichtungen zum Pumpen und Kühlen derselben, identische Bauform auf.

Die Scheibenlaserkristalle 2, 3 sind als Scheiben mit zwei Flachseiten ausgebildet. Mit ihren unteren Flachseiten sind die Scheibenlaserkristalle 2, 3 auf Wärmesenken **7, 8** befestigt. Auf die oberen Flachseiten, im Folgenden als Oberflächen **9, 10** der Scheibenlaserkristalle 2, 3 bezeichnet, treffen zwei gestrichelt dargestellte Pumpstrahlungsfelder **11, 12** auf, die von zwei Pumpmodulen **13, 14** erzeugt werden, welche Teil einer nicht bildlich dargestellten Pumpanordnung zur Erzeugung von Pumpstrahlung sind. Die Pumpstrahlungsfelder 11, 12 werden durch Parabolspiegelanordnungen **15, 16** auf den Oberflächen 9, 10 der Scheibenlaserkristalle 2, 3 als Pumplichtflecke fokussiert. Die Parabolspiegelanordnungen 15, 16 weisen jeweils eine zentrale Öffnung auf, durch welche das Laserstrahlungsfeld 4 zu den Scheibenlaserkristallen 2, 3 gelangen und in deren laseraktives Festkörpervolumen eindringen kann. Die Öffnungen sind hierbei ausreichend groß dimensioniert, damit ihnen keine Blendenwirkung für das Laserstrahlungsfeld 4 zukommt. Die Scheibenlaserkristalle 2, 3 sind auf ihren unteren Flachseiten sowohl für die Pumpstrahlung als auch für die Laserstrahlung reflektierend beschichtet.

Ein sphärischer Hohlspiegel **17** ist im Laserstrahlungsfeld 4 zwischen dem ersten Scheibenlaserkristall 2 und dem zweiten Scheibenlaserkristall 3 ungefähr im Abstand seines halben Radius $R_1$ sowohl von der Oberfläche 9 des ersten Scheibenlaserkristalls 2 als auch von der Oberfläche 10 des zweiten Scheibenlaserkristalls 3 entfernt angeordnet. Der sphärische Hohlspiegel 17 sorgt dafür, dass die Oberfläche 10 des Scheibenlaserkristalls 3 und die Oberfläche 9 des Scheibenlaserkristalls 2 über eine Nahfeld-Fernfeld-Transformation (Fourier-Transformation) ineinander übergeführt werden können. Die Randbereiche der Pumplichtflecke auf den Oberflächen 9 und 10 wirken als weiche Blenden für das Laserstrahlungsfeld 4.

Der in **Fig. 2** gezeigte Laserresonator **1'** weist zwei Scheibenlaserkristalle **2, 3** auf, deren Oberflächen **9, 10** über eine Sammellinse **18** mit einer Brennweite **$f_1$** gekoppelt sind. Die Sammellinse 18 ist im Abstand $f_1$ sowohl von der ersten Oberfläche 9 als auch von der zweiten Oberfläche 10 entfernt angeordnet. Hierdurch sind die Oberfläche 10 des Scheibenlaserkristalls 3 und die Oberfläche 9 des Scheibenlaserkristalls 2 über eine Nahfeld-Fernfeld-Transformation (Fourier-Transformation) ineinander überführbar, so dass die Randbereiche der Pumplichtflecke auf den Oberflächen 9 und 10 der Laserkristalle 2 und 3 als weiche Blenden für das Laserstrahlungsfeld 4 wirken. Der Laserresonator 1' entspricht in seinem Aufbau ansonsten dem Laserresonator 1 von Fig. 1 und ist demzufolge nicht näher beschrieben.

Durch die Nahfeld-Fernfeld-Transformation wird - unabhängig vom Rest des Resonators - das maximale Strahlparameterprodukt w•θ der Laserstrahlung festgelegt: Es ergibt sich für die Anordnung mit Hohlspiegel 17 als fokussierendem optischen Element:

$$w{\cdot}\theta \leq 2\,(w_1{\cdot}w_2) / R_1,$$

($w_1$, $w_2$: Durchmesser des Laserstrahlungsfeldes auf den beiden Scheibenlaserkristallen; θ: Strahldivergenz, $R_1$: Radius des Hohlspiegels 17), da nur die Anteile des Laserstrahlungsfeldes, die diese Bedingung erfüllen, nicht an den "weichen" Verstärkungs-/Verlust-Blenden der Scheibenlaserkristalle 2,3 ausgefiltert werden. Für die analoge Anordnung, bei welcher der Hohlspiegel 17 durch eine Linse 18 mit Brennweite $f_1$ ersetzt ist, ergibt sich für das maximale Strahlparameterprodukt: w•θ ≤ (w1•w2)/ $f_1$.

Der Laserresonator 1, 1' wird sinnvoller Weise so ausgelegt, dass er mindestens dieses Strahlparameterprodukt zulässt. Ein interessanter Spezialfall liegt vor, wenn die durch die Auslegung der Endarme des Laserresonators festgelegte Strahlqualität genau der durch die Nahfeld-Fernfeld-Transformation festgelegten Obergrenze entspricht. Die Länge des ersten Endarms ist durch den Abstand der Oberfläche 9 des Scheibenlaserkristalls 2 von einem Endspiegel **5** und die Länge des zweiten Endarms durch den Abstand der Oberfläche 10 des Scheibenlaserkristalls 3 von einem Auskoppelspiegel **6** gegeben.

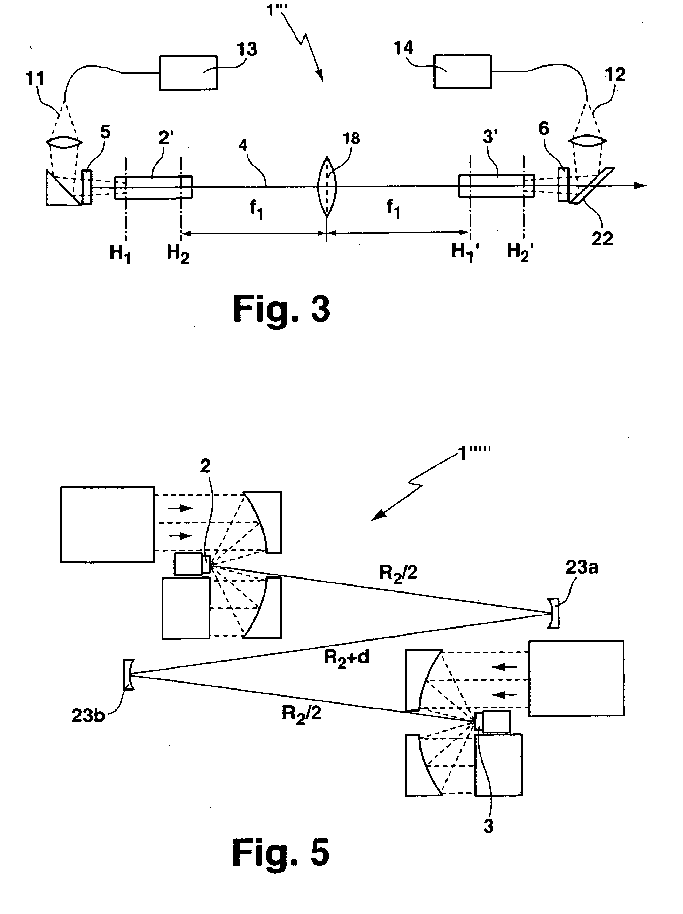

In **Fig. 3** ist ein Laserresonator **1'''** gezeigt, der zwei stabförmige Laserkristalle **2', 3'** im Laserstrahlungsfeld 4 aufweist, die über eine Nahfeld-Fernfeld-Transformation gekoppelt sind. Die Laserkristalle 2', 3' weisen je eine erste Hauptebene $H_1$, $H_1'$ und eine zweite Hauptebene $H_2$, $H_2'$ auf. Die Laserkristalle 2', 3' sind axial nur in einem zentralen Teilvolumen gepumpt. Sie bestehen aus einem Material geringer Verstärkung, beispielsweise Yb:YAG. Im dargestellten Beispiel wird das Auftreten harter Aperturen im laseraktiven Medium durch das Pumpen eines zentralen axialen Teilbereichs mittels (fasergekoppelter) Laserdioden als Pumpmodulen 13, 14 erreicht. Die Pumplichtstrahlung 11, 12 wird über zwei dichroitische Resonatorspiegel als Endspiegel 5 bzw. Auskoppelspiegel 6 sowie einen weiteren, resonatorexternen dichroitischen Teilerspiegel **22,** der den austretenden Laserstrahl vom Pumplicht trennt, axial in die stabförmigen Laserkristalle 2', 3' eingestrahlt. Für eine optimale Funktion der Nahfeld-Fernfeld-Transformation sollte sich der dynamische Bereich der thermischen Linsen bei variierenden Betriebsbedingungen des Laserresonators 1''' nicht bis an die Grenzen des stabilen Bereichs im g-Diagramm erstrecken. Vorzugsweise wird der Stablaser mit (nahezu) konstanter Pumpleistung betrieben, um den Einfluss der thermischen Linse gering zu halten und so eine hohe Strahlqualität zu ermöglichen. Unter Umständen ist zusätzlich eine Kompensation der thermisch induzierten Doppelbrechung - etwa durch einen mittig angeordneten 90°-Rotator - erforderlich. Nur bei großem Strahlquerschnitt und hoher Strahlqualität wirkt sich die Filterung in Nah- und Fernfeld mittels weicher Aperturen signifikant auf den Laserwirkungsgrad aus. Zwischen den stabförmigen Laserkristallen 2', 3' ist eine Linse **18** mit positiver Brennweite $f_1$ angeordnet, deren Abstand von den benachbarten Hauptebenen $H_2$ und $H_1'$ der beiden Laserstäbe jeweils ungefähr ihrer Brennweite $f_1$ entspricht. Das zur Hauptebene $H_2$ des linken Stabes gehörende Fernfeld befindet sich somit im Abstand der Brennweite $f_1$ rechts von der Linse; dort ist die Hauptebene $H_1'$ des rechten Stabes angeordnet. Die Nahfeld-Fernfeld-Transformation gilt näherungsweise in einem axialen Bereich der Laserstäbe, in dem die Fresnel-Zahl $F = a^2/(\lambda{\cdot}L)$ deutlich größer als eins ist (F >> 1).

Hierbei ist a die transversale Ausdehnung der beugenden Struktur, λ die Wellenlänge der Laserstrahlung und L der axiale Abstand von der exakten Transformationsebene. Wenn die beugenden Strukturen hinreichend groß sind und der Laserstab nicht zu lang ist, bewirkt die Nahfeld-Fernfeld-Transformation eine erhebliche Reduktion der Beugungsverluste.

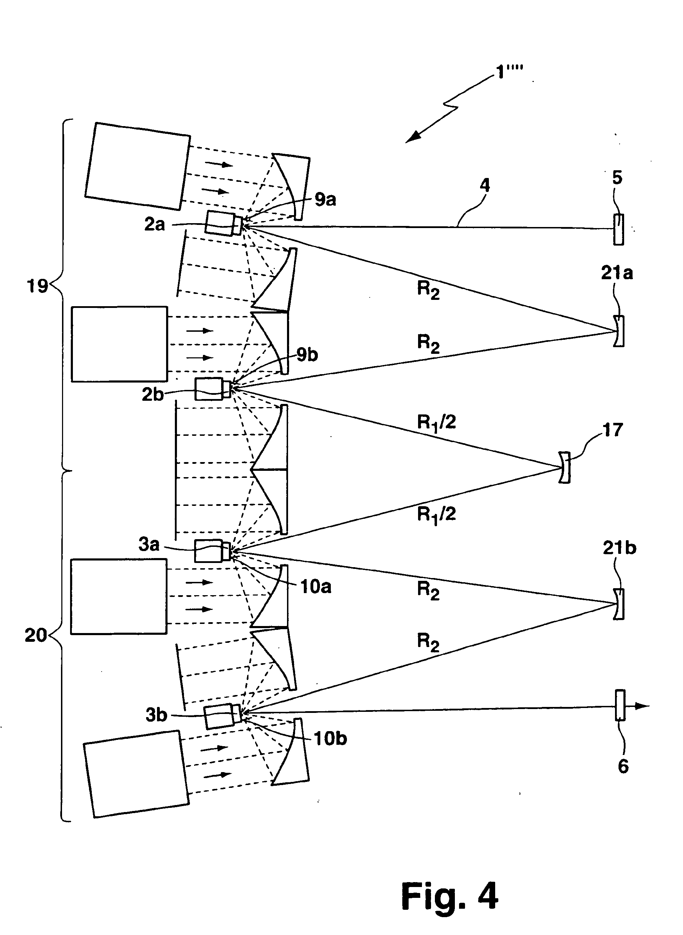

In **Fig. 4** ist ein Laserresonator **1''''** gezeigt, welcher ein erstes Paar **19** von Scheibenlaserkristallen **2a, 2b** und ein zweites Paar **20** von Scheibenlaserkristallen **3a, 3b** aufweist. Die Oberflächen **9a, 9b** der beiden Scheibenlaserkristalle 2a, 2b des ersten Paares 19 werden aufeinander durch einen als abbildendes optisches Element dienenden, sphärischen Hohlspiegel **21a** im Maßstab 1:1 abgebildet, der im Abstand seines Radius $R_2$ zu den Oberflächen 9a, 9b der Scheibenlaserkristalle 2a, 2b angeordnet ist. In analoger Weise werden die Oberflächen **10a, 10b** der beiden Scheibenlaserkristalle 3a, 3b des zweiten Paares 20 aufeinander durch den sphärischen Hohlspiegel **21b** abgebildet. Ein Hohlspiegel 17 ist zwischen der Oberfläche 9b des Scheibenlaserkristalls 2b des ersten Paares 19 und der Oberfläche 10a des Scheibenlaserkristalls 3a des zweiten Paares 20 im Abstand seines halben Radius **$R_1$** angeordnet. Der sphärische Hohlspiegel 17 koppelt die beiden Paare 19, 20 derart, dass ein beiden gemeinsames Laserstrahlungsfeld 4 entsteht. Er sorgt dafür, dass die Oberfläche 9b des Scheibenlaserkristalls 2b des ersten Paares 19 und die Oberfläche 10a des Scheibenlaserkristalls 3a des zweiten Paares 20 über eine Nahfeld-Fernfeld-Transformation (Fourier-Transformation) ineinander übergeführt werden können. Die Randbereiche der Pumplichtflecke auf den Oberflächen 9b und 10a wirken als weiche Blenden für das Laserstrahlungsfeld 4.

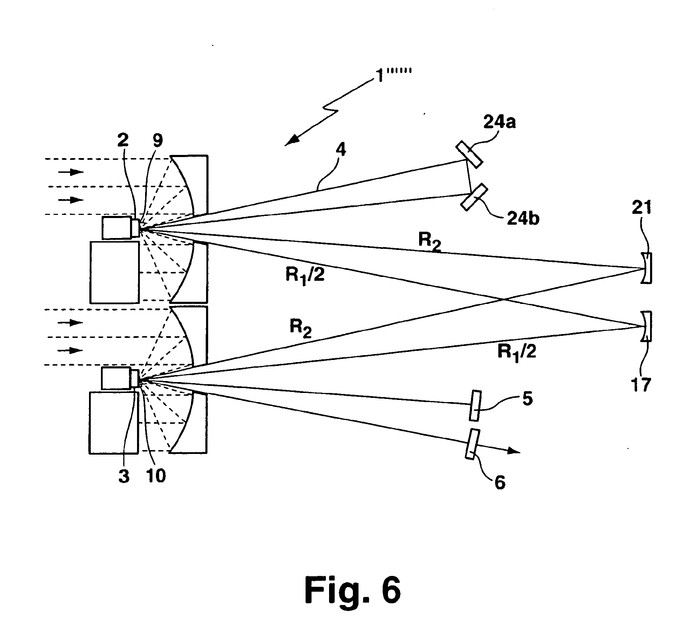

In **Fig. 5** ist ein Ausschnitt aus einem Laserresonator oder Laserverstärker **1'''''** gezeigt, in welchem zwischen zwei Scheibenlaserkristallen 2, 3 ein Teleskop aus zwei sphärischen Hohlspiegeln **23a, 23b** als fokussierendes optisches Element für die Abbildung der Laserkristalle aufeinander angeordnet ist. Die Hohlspiegel 23a, 23b weisen einen identischen Krümmungsradius **$R_2$** auf und sind etwa im Abstand ihres halben Radius $R_2$ vom jeweils benachbarten Laserkristall 2, 3 angeordnet. Der Abstand zwischen den beiden Hohlspiegeln 23a, 23b ist gleich dem Spiegelradius $R_2$, wenn eine Abbildung ohne Brechkraftüberschuss erreicht werden soll. Durch Änderung des Abstands der Hohlspiegel 23a, 23b voneinander von $R_2$ auf $R_2$+**d** kann gezielt sowohl ein positiver (d > 0) als auch ein negativer (d < 0) Brechkraftüberschuss erzeugt werden.

In **Fig. 6** ist ein Laserresonator **1''''''** mit zwei Scheibenlaserkristallen 2, 3 im Laserstrahlungsfeld 4 gezeigt, in dem sowohl die Nahfeld-Fernfeld-Transformation als auch die Abbildung der Scheibenlaserkristalle 2, 3 aufeinander an demselben Paar von Scheibenlaserkristallen 2, 3 angewendet ist. Der Weg des Laserstrahlungsfeldes 4 im Resonator verläuft vom Endspiegel 5 zum Laserkristall 3, von dort über einen sphärischen Hohlspiegel 17 zum Laserkristall 2 und anschließend über zwei planare Umlenkspiegel **24a, 24b** zu diesem zurück, von dort über einen weiteren sphärischen Hohlspiegel 21 erneut zum Laserkristall 3 und schließlich zum Auskoppelspiegel. Der sphärische Hohlspiegel 17 sorgt dafür, dass die Oberfläche 10 des Scheibenlaserkristalls 3 und die Oberfläche 9 des Scheibenlaserkristalls 2 über eine Nahfeld-Fernfeld-Transformation (Fourier-Transformation) ineinander übergeführt werden können. Dazu ist der Hohlspiegel 17 jeweils annähernd im Abstand seines halben Radius $R_1$ zu den Scheibenlaserkristallen 2, 3 angeordnet. Der weitere sphärische Hohlspiegel 21 sorgt dafür, dass die Oberflächen 9 und 10 der Scheibenlaserkristalle 2 und 3 aufeinander abgebildet werden, bevorzugt im Maßstab 1 : 1. Dazu ist der weitere Hohlspiegel 21 jeweils annähernd im Abstand seines Radius $R_2$ zu den Scheibenlaserkristallen 2, 3 angeordnet.

## Patentansprüche

1. Festkörperlaserverstärker oder Festkörperlaserresonator (1; 1'; 1'''; 1''''; 1'''''; 1'''''') mit mindestens zwei laseraktiven Medien in einem gemeinsamen Laserstrahlungsfeld (4), wobei die laseraktiven Medien keine harte Apertur für das Laserstrahlungsfeld (4) bilden,
   wobei
   im Laserstrahlungsfeld (4) mindestens ein fokussierendes optisches Element (17, 18) zwischen zwei benachbarten laseraktiven Medien angeordnet ist, **dadurch gekennzeichnet, dass** die Brennweite des mindestens einen fokussierenden optischen Elements und dessen Abstand von den Oberflächen (9, 10; 9b, 10a) bzw. Hauptebenen ($H_2$, $H_1$') der zwei benachbarten laseraktiven Medien jeweils derart gewählt sind, dass die Oberflächen (9, 9b) bzw. die Hauptebenen ($H_2$) der laseraktiven Medien durch eine Nahfeld-Fernfeld-Transformation (Fourier-Transformation) ineinander überführbar sind.

2. Laserverstärker oder Laserresonator nach Anspruch 1, **dadurch gekennzeichnet, dass** das mindestens eine fokussierende optische Element eine Linse (18) mit positiver Brennweite ($f_1$) ist, die ungefähr im Brennweitenabstand von den Oberflächen (9, 10) bzw. Hauptebenen der zwei benachbarten laseraktiven Medien im Laserstrahlungsfeld (4) angeordnet ist.

3. Laserverstärker oder Laserresonator nach Anspruch 1 oder 2, **dadurch gekennzeichnet, dass** das mindestens eine fokussierende optische Element ein sphärischer Hohlspiegel (17) ist, der ungefähr im Abstand des halben Krümmungsradius ($R_1$) von den Oberflächen (9, 10; 9b, 10a) bzw. den Hauptebenen der zwei benachbarten laseraktiven Medien im Laserstrahlungsfeld (4) angeordnet ist.

**4.** Laserverstärker oder Laserresonator nach einem der vorhergehenden Ansprüche, **gekennzeichnet durch** mindestens ein zusätzliches fokussierendes optisches Element im Laserstrahlungsfeld (4), dessen Brennweite und dessen Abstand zu den Oberflächen (9a, 9b, 10a, 10b) bzw. Hauptebenen zweier benachbarter laseraktiver Medien derart gewählt sind, dass die Oberflächen bzw. Hauptebenen aufeinander abgebildet werden.

**5.** Laserverstärker oder Laserresonator nach Anspruch 4, **dadurch gekennzeichnet, dass** das mindestens eine zusätzliche fokussierende optische Element ein abbildendes Element ist, welches die Oberflächen (9, 10; 9a, 9b, 10a, 10b) bzw. die Hauptebenen der zwei benachbarten laseraktiven Medien im Maßstab eins zu eins aufeinander abbildet.

**6.** Laserverstärker oder Laserresonator nach Anspruch 4 oder 5, **dadurch gekennzeichnet, dass** das mindestens eine zusätzliche fokussierende optische Element eine Linse mit einer positiven Brennweite ist, die ungefähr im doppelten Brennweitenabstand von den Oberflächen bzw. den Hauptebenen der zwei benachbarten laseraktiven Medien angeordnet ist.

**7.** Laserverstärker oder Laserresonator nach einem der Ansprüche 4 bis 6, **dadurch gekennzeichnet, dass** das mindestens eine zusätzliche fokussierende optische Element ein sphärischer Hohlspiegel (21; 21a, 21b) ist, der ungefähr im Abstand seines Radius ($R_2$) von den benachbarten Oberflächen (9, 10; 9a, 9b, 10a, 10b) zweier laseraktiver Medien (2, 3; 2a, 2b; 3a, 3b) angeordnet ist.

**8.** Laserverstärker oder Laserresonator nach einem der Ansprüche 4 bis 7, **dadurch gekennzeichnet, dass** das mindestens eine zusätzliche fokussierende optische Element durch eine Teleskopanordnung aus zwei vorzugsweise identischen Hohlspiegeln (23a, 23b) oder Linsen gebildet ist.

**9.** Laserverstärker oder Laserresonator nach einem der vorhergehenden Ansprüche, **dadurch gekennzeichnet, dass** mindestens zwei Paare (19, 20) von Scheibenlaserkristallen (2a, 2b, 3a, 3b) im Laserstrahlungsfeld (4) angeordnet sind, wobei die Oberflächen (9a, 9b, 10a, 10b) der Scheibenlaserkristalle (2a, 2b, 3a, 3b) jedes Paares (19, 20) jeweils durch ein erstes fokussierendes optisches Element (21a, 21b) aufeinander abgebildet sind und wobei im Laserstrahlungsfeld (4) zwischen den Paaren (19, 20) ein zweites fokussierendes optisches Element (17) angeordnet ist, das die Oberfläche (9b) eines Scheibenlaserkristalls (2b) des einen Paares (19) und die Oberfläche (10a) eines Scheibenlaserkristalls (3a) des anderen Paares (20) über eine Nahfeld-Fernfeld-Transformation (Fourier-Transformation) miteinander koppelt.

## Claims

**1.** Solid-state laser amplifier or solid-state laser resonator (1;1';1'''';1''''';1''''';1''''''') having at least two laser-active media in a common laser radiation field (4), the laser-active media not forming a hard aperture for the laser radiation field (4),
at least one optical focusing element (17,18) being arranged in the laser radiation field (4) between two adjacent laser-active media,
**characterised in that** the focal length of the at least one optical focusing element and the distance thereof from the surfaces (9,10;9b,10a) or main planes ($H_2,H_1'$) of the two adjacent laser-active media are each selected in such a manner that the surfaces (9,9b) or the main planes ($H_2$) of the laser-active media can be transformed into each other by a near-field/far-field transformation (Fourier transform).

**2.** Laser amplifier or laser resonator according to claim 1, **characterised in that** the at least one optical focusing element is a lens (18) which has a positive focal length ($f_1$) and which is arranged approximately at a distance of a focal length from the surfaces (9,10) or main planes of the two adjacent laser-active media in the laser-radiation field (4).

**3.** Laser amplifier or laser resonator according to claim 1 or 2, **characterised in that** the at least one optical focusing element is a spherical concave mirror (17) which is arranged approximately at a distance of half of the radius of curvature ($R_1$) from the surfaces (9,10;9b,10a) or the main planes of the two adjacent laser-active media in the laser radiation field (4).

**4.** Laser amplifier or laser resonator according to any one of the preceding claims, **characterised by** at least one additional optical focusing element in the laser radiation field (4) whose focal length and distance relative to the surfaces (9a, 9b, 10a, 10b) or main planes of two adjacent laser-active media are selected in such a manner that the surfaces or main planes are mapped onto each other.

**5.** Laser amplifier or laser resonator according to claim 4, **characterised in that** the at least one additional optical focusing element is an imaging element which maps the surfaces (9,10;9a,9b,10a,10b) or the main planes of the two adjacent laser-active media onto each other at a scale of 1:1.

**6.** Laser amplifier or laser resonator according to claim 4 or 5, **characterised in that** the at least one additional optical focusing element is a lens which has a positive focal length and which is arranged approximately at a distance of twice the focal length from the surfaces or the main planes of the two adjacent laser-active media.

7. Laser amplifier or laser resonator according to any one of claims 4 to 6, **characterised in that** the at least one additional optical focusing element is a spherical concave mirror (21;21a,21b) which is arranged approximately at a distance of the radius ($R_2$) thereof from the adjacent surfaces (9, 10; 9a, 9b, 10a, 10b) of two laser-active media (2,3;2a,2b;3a, 3b).

8. Laser amplifier or laser resonator according to any one of claims 4 to 7, **characterised in that** the at least one additional optical focusing element is formed by a telescopic arrangement comprising two preferably identical concave mirrors (23a, 23b) or lenses.

9. Laser amplifier or laser resonator according to any one of the preceding claims, **characterised in that** at least two pairs (19,20) of disc-shaped laser crystals (2a,2b,3a,3b) are arranged in the laser radiation field (4), with the surfaces (9a,9b,10a,10b) of the disc-shaped laser crystals (2a,2b,3a,3b) of each pair (19,20) each being mapped onto each other by a first optical focusing element (21a,21b), and a second optical focusing element (17) being arranged between the pairs (19,20) in the laser radiation field (4) and coupling the surface (9b) of a disc-shaped laser crystal (2b) of the first pair (19) and the surface (10a) of a disc-shaped laser crystal (3a) of the other pair (20) to each other via a near-field/far-field transformation (Fourier transform).

## Revendications

1. Amplificateur laser à solide ou résonateur laser à solide (1 ; 1' ; 1''' ; 1'''' ; 1''''' ; 1'''''') comprenant au moins deux milieux laser actifs dans un champ de rayonnement laser (4) commun, les milieux laser actifs ne formant pas une ouverture dure pour le champ de rayonnement laser (4), au moins un élément optique focalisant (17, 18) étant disposé dans le champ de rayonnement laser (4) entre deux milieux laser actifs voisins, **caractérisé par le fait que** la distance focale dudit au moins un élément optique focalisant et sa distance aux surfaces (9, 10 ; 9b, 10a) ou aux plans principaux ($H_2$, $H_1$') des deux milieux laser actifs voisins sont choisies de telle manière que les surfaces (9, 9b) ou les plans principaux ($H_2$) des milieux laser actifs soient transformables l'un(e) en l'autre par transformation champ proche - champ lointain (transformation de Fourier).

2. Amplificateur laser ou résonateur laser selon la revendication 1, **caractérisé par le fait que** ledit au moins un élément optique focalisant est une lentille (18) à distance focale ($f_1$) positive qui est disposée approximativement à la distance focale des surfaces (9, 10) ou des plans principaux des deux milieux laser actifs voisins dans le champ de rayonnement laser (4).

3. Amplificateur laser ou résonateur laser selon la revendication 1 ou 2, **caractérisé par le fait que** ledit au moins un élément optique focalisant est un miroir concave sphérique (17) qui est disposé approximativement à la distance du demi-rayon de courbure ($R_1$) des surfaces (9, 10 ; 9b, 10a) ou des plans principaux des deux milieux laser actifs voisins dans le champ de rayonnement laser (4).

4. Amplificateur laser ou résonateur laser selon l'une des revendications précédentes, **caractérisé par** au moins un élément optique focalisant supplémentaire dans le champ de rayonnement laser (4), dont la distance focale et la distance aux surfaces (9a, 9b, 10a, 10b) ou des plans principaux de deux milieux laser actifs voisins sont choisies de telle manière que les images des surfaces ou des plans principaux soient formées l'une sur l'autre.

5. Amplificateur laser ou résonateur laser selon la revendication 4, **caractérisé par le fait que** ledit au moins un élément optique focalisant supplémentaire est un élément de formation d'image qui forme les images des surfaces (9, 10 ; 9a, 9b, 10a, 10b) ou des plans principaux des deux milieux laser actifs voisins l'une sur l'autre à l'échelle un:un.

6. Amplificateur laser ou résonateur laser selon la revendication 4 ou 5, **caractérisé par le fait que** ledit au moins un élément optique focalisant supplémentaire est une lentille à distance focale positive qui est disposée approximativement au double de la distance focale des surfaces ou des plans principaux des deux milieux laser actifs voisins.

7. Amplificateur laser ou résonateur laser selon l'une des revendications 4 à 6, **caractérisé par le fait que** ledit au moins un élément optique focalisant supplémentaire est un miroir concave sphérique (21 ; 21a, 21b) qui est disposé approximativement à la distance de son rayon ($R_2$) des surfaces voisines (9, 10 ; 9a, 9b, 10a, 10b) de deux milieux laser actifs (2, 3 ; 2a, 2b ; 3a, 3b).

8. Amplificateur laser ou résonateur laser selon l'une des revendications 4 à 7, **caractérisé par le fait que** ledit au moins un élément optique focalisant supplémentaire est formé d'un dispositif télescopique composé de deux miroirs concaves (23a, 23b) ou de lentilles de préférence identiques.

9. Amplificateur laser ou résonateur laser selon l'une des revendications précédentes, **caractérisé par le fait qu'**au moins deux paires (19, 20) de cristaux de laser à disque (2a, 2b, 3a, 3b) sont disposées dans le champ de rayonnement laser (4), les images des surfaces (9a, 9b, 10a, 10b) des cristaux de laser à disque (2a, 2b, 3a, 3b) de chaque paire (19, 20) étant chaque fois formées l'une sur l'autre par un premier élément optique focalisant (21a, 21b) et un deuxième élément optique focalisant (17) étant disposé dans le champ de rayonnement laser (4) entre les paires (19, 20) qui couple entre elles la surface (9b) d'un cristal de laser à disque (2b) d'une paire (19) et la surface (10a) d'un cristal de laser à disque (3a) de l'autre paire (20) par une transformation champ proche - champ lointain (transformation de Fourier).

**Fig. 1**

**Fig. 2**

**Fig. 3**

**Fig. 5**

1''''''

4    5

9a

2a    R₂

19    21a

R₂

9b

2b    R₁/2

17

R₁/2

3a    21b

10a    R₂

20    R₂

3b    6

10b

# Fig. 4

**Fig. 6**